# EUROPEAN PATENT SPECIFICATION

(11) **EP 3 682 294 B1**
(45) Date of publication and mention of the grant of the patent: **10.05.2023**
(21) Application number: 18855129.5
(22) Date of filing: 13.09.2018
(51) Int. Cl.: G02F 1/1347, G02F 1/1362

(54) **DISPLAY APPARATUS AND MANUFACTURING METHOD THEREOF**
ANZEIGEVORRICHTUNG UND HERSTELLUNGSVERFAHREN DAFÜR
APPAREIL D'AFFICHAGE ET PROCÉDÉ DE FABRICATION ASSOCIÉ

(30) Priority: 14.09.2017 CN 201710829171
(43) Date of publication of application: 22.07.2020
(73) Proprietor: BOE Technology Group Co., Ltd., Beijing 100015 (CN); Beijing BOE Display Technology Co., Ltd., Beijing 100176 (CN)
(72) Inventor: SHAO, Xibin, Beijing 100176 (CN); QU, Yingying, Beijing 100176 (CN); GAO, Yujie, Beijing 100176 (CN); SUN, Zhihua, Beijing 100176 (CN); ZHAO, Hebin, Beijing 100176 (CN)
(74) Representative: Klunker IP Patentanwälte PartG mbB
(86) International application number: PCT/CN2018/105485
(87) International publication number: WO 2019/052503

(56) References cited:
- WO-A1-2014/109601
- CN-A- 101 351 743
- CN-A- 103 676 364
- CN-A- 103 941 493
- CN-A- 105 954 947
- US-A1- 2008 192 158
- US-A1- 2009 046 212
- US-A1- 2009 147 186
- US-A1- 2010 097 550

## Description

### TECHNICAL FIELD

The present invention relates generally to the field of display technologies, and more specifically to a display apparatus and its manufacturing method.

### BACKGROUND

With the rapid and continuous development of display technologies, liquid crystal display (LCD) apparatuses have been widely applied in the display field. Common LCD apparatuses include, for example, LCD televisions, and LCD computer monitors, etc.

US 2009/046212 A1 discloses a LCD device combining two active matrix type liquid crystal panels (a first panel and a second panel). A data signal wiring of each panel is formed by a transparent conductive film, and an island-like black matrix is formed so as to cover a TFT element.

US 2009/147186 A1 discloses a LCD containing a first panel and a second panel being stacked. Adjacent pairs of polarizers disposed on the panels form crossed Nicols. When the first panel produces a display according to a first display signal, the second panel produces a display according to a second display signal obtained from the first display signal. Each of the two joined panels is provided with a light diffusion layer having a light diffusing property. WO 2014/109601 A1 represents also prior art relevant to the present invention.

### SUMMARY

It is an objective of the present disclosure to provide a display apparatus and a method for manufacturing the display apparatus.

The object is achieved by the respective independent claims. Further embodiments are defined in the corresponding dependent claims.

### BRIEF DESCRIPTION OF DRAWINGS

In order to clearly illustrate various embodiments provided in the present disclosure, the following are drawings that accompany the description of the embodiments.

It is noted that these drawings shall be interpreted to serve illustrating purposes only, and that these drawings may represent just some, but not all, of embodiments of the present disclosure. For those skilled in the art, other embodiments that are based on the structures as described below and illustrated in these drawings may become obvious.
FIG. 1 is a schematic diagram of the structure of a display apparatus according to some embodiments of the disclosure;
FIG. 2 is a schematic diagram of the stacking of two display panels in the display apparatus disclosed herein;
FIG. 3 is a schematic diagram illustrating a positional relationship of projections of signal lines from any two display panels in a display apparatus on a same plane according to some embodiments of the disclosure;
FIG. 4 is a schematic diagram of the structure of a display apparatus according to some other embodiments of the disclosure;
FIG. 5 is a schematic diagram of the structure of a display apparatus according to yet some other embodiments of the disclosure;
FIG. 6 is a schematic diagram of the structure of a display apparatus according to yet some other embodiments of the disclosure;
FIG. 7 illustrates a comparison between a brightness distribution of a display apparatus at an ideal situation and positional relationships of the projections of the signal lines from any two display panels of the display apparatus on a same plane, which do not cross with one another;
FIG. 8 illustrates a comparison between a brightness distribution of a display apparatus at an actual situation and positional relationships of the projections of the signal lines from any two display panels of the display apparatus on a same plane, which do not cross with one another;
FIG. 9 illustrates a comparison between a brightness distribution of a display apparatus at an ideal situation and positional relationships of the projections of the signal lines from any two display panels of the display apparatus on a same plane, which cross with one another;
FIG. 10 illustrates a comparison between a brightness distribution of a display apparatus at an actual situation and positional relationships of the projections of the signal lines from any two display panels of the display apparatus on a same plane, which cross with one another;
FIG. 11 is a flow chart illustrating a method for manufacturing a display apparatus according to some embodiments of the disclosure;
FIG. 12 is a flow chart illustrating the sub-steps in the step S101 in the embodiments of the method shown in FIG. 11 according to some embodiments of the disclosure;
FIG. 13 is a flow chart illustrating the sub-steps in the sub-step S1011 in the embodiments of the method shown in FIG. 12 according to some embodiments of the disclosure;
FIG. 14 is a flow chart illustrating the sub-steps in the sub-step S1012 in the embodiments of the method shown in FIG. 12 according to some embodiments of the disclosure;
FIG. 15 illustrates a sub-step in the sub-step S1011 in the embodiments of the method shown in FIG. 12 according to some embodiments of the disclosure;
FIG. 16 illustrates a sub-step in the sub-step S1012 in the embodiments of the method shown in FIG. 12 according to some embodiments of the disclosure;
FIG. 17 illustrates a sub-step in the step S102 in the embodiments of the method shown in FIG. 12 according to some embodiments of the disclosure;
FIG. 18 illustrates a sub-step in the sub-step S1011 in the embodiments of the method shown in FIG. 12 according to some other embodiments of the disclosure;
FIG. 19 illustrates a sub-step in the sub-step S1012 in the embodiments of the method shown in FIG. 12 according to some other embodiments of the disclosure;
FIG. 20 illustrates a sub-step in the step S102 in the embodiments of the method shown in FIG. 12 according to some other embodiments of the disclosure;
FIG. 21A is a flow chart illustrating a method for manufacturing a display apparatus according to one specific embodiment of the disclosure;
FIG. 21B is a flow chart illustrating a method for manufacturing a display apparatus according to another specific embodiment of the disclosure; and
FIG. 22 is a flow chart illustrating sub-steps in step S201 in the method for manufacturing a display apparatus shown in FIG. 21A and FIG. 21B according to another specific embodiment of the disclosure.

### DETAILED DESCRIPTION

In the following, with reference to the drawings of various embodiments disclosed herein, the technical solutions of the embodiments of the disclosure will be described in a clear and fully understandable way. It is obvious that the described embodiments are merely a portion but not all of the embodiments of the disclosure. Based on the described embodiments of the disclosure, those ordinarily skilled in the art can obtain other embodiment(s), which come(s) within the scope sought for protection by the disclosure.

A typical LCD display apparatus usually includes a LCD display panel and a backlight. The LCD display panel includes an array substrate and a color film substrate which are opposingly arranged in the display panel. A liquid crystal layer is arranged between the array substrate and the color film substrate. A first polarization layer is disposed over a side of the array substrate that is far away from, or distal to, the liquid crystal layer. A second polarization layer is disposed over a side of the color film substrate that is far away from the liquid crystal layer. In the LCD display apparatus, the backlight is arranged over a side of the LCD display panel that is that is close, or proximal, to the first polarization layer.

In the display process of a LCD display apparatus, lights emitted by and from the backlight sequentially pass through the first polarization layer, the array substrate, the liquid crystal layer and the color film substrate, and then emit out from the second polarization layer. When a light passes through the liquid crystal layer, the liquid crystal molecules in the liquid crystal layer can adjust a luminous flux of the light passing through the liquid crystal layer, so that the LCD apparatus can display an image.

Through the adjustment of the light by means of the liquid crystal molecules in the liquid crystal layer, the LCD display apparatus can present a bright state (i.e., a state of the display apparatus displaying a white image) or present a dark state (i.e., a state of the display apparatus displaying a black image). The ratio of a brightness at the bright state and a brightness at the dark state is called a contrast ratio of the LCD display apparatus. Typically, the higher the contrast ratio of a display apparatus, and the better the display effect thereof.

At present, commonly due to the influence by the display principle and display process of a conventional LCD display apparatus, it is relatively easy to improve the brightness of the display apparatus at the bright state, whereas it is difficult to reduce the brightness of the display apparatus at the dark state, causing the contrast ratio of the LCD display apparatus to be relatively low. For example, the contrast ratio of a LCD display apparatus having a vertical alignment (VA) is around 5000:1.

The present disclosure provides a solution to an LCD display apparatus, which can reduce a brightness of the display apparatus at the dark state to some extent, resulting in an increased contrast ratio for the LCD display apparatus and in turn leading to an elevation of the display effect.

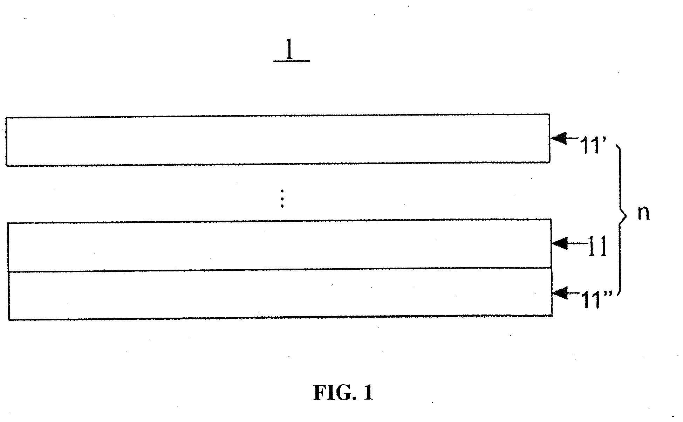

FIG. 1 illustrates a schematic diagram of the structure of a display apparatus according to some embodiments of the disclosure. As shown in the figure, the display apparatus includes a total of *n* display panels 11 that are stacked over one another, where *n* is an integer that is no less than 2 (i.e. *n*≥2). Among those n display panels, the display panel that is arranged at a light-emitting side of the display apparatus (not shown in the figure) is specifically referred to as a first display panel 11', whereas the display panel that is arranged at a light-incident side of the display apparatus (not shown in the figure) is specifically referred to as a second display panel 11", as illustrated in FIG. 1.

Each of the n display panels 11 comprises a plurality of pixel structures (not shown in FIG. 1) and a plurality of signal lines that are electrically coupled with each of the plurality of pixel structures (also not shown in FIG. 1). The plurality of pixel structures of each of any two of the n display panels 11 have a substantially same layout (i.e. an orthographic projection of the plurality of pixel structures of each of the n display panels on a plane perpendicular to the light transmission direction is substantially matched with one another). The plurality of signal lines of each of any two of the n display panels 11 are configured such that their projections on a same plane have an angle (i.e. cross with each other). Herein, and throughout the whole disclosure, the term "match" is referred to as a situation where an orthographic projection of the plurality of pixel structure of one display panel on a plane perpendicular to the light transmission direction of the display apparatus and an orthographic projection of the plurality of pixel structure of another display panel on the same plane have substantially same shapes, orientations, sizes, and positional arrangements, etc., and thereby align with each other in a substantially exact manner.

As such, in the display apparatus described above, because the n display panels 11 are stacked over one another, each of the n display panel is able to shield a light, resulting in a reduced brightness of the display apparatus at the dark state, in turn leading to an increased contrast ratio of the display apparatus. Thereby the issues associated with current LCD display apparatuses, such as low contrast ratio and poor display effects, can be effective solved.

It is noted that because the plurality of signal lines of each of any two of the n display panels 11 are configured such that their projections on a same plane have an angle (i.e. cross with each other), the plurality of signal lines in different display panels can staggeringly shield the lights. As such, the overall brightness of the display apparatus can be staggered, effectively avoiding the issue where the inaccurate alignment of the stacking of the n display panels causes an uneven brightness of the display apparatus. Thereby the evenness of the brightness of the display apparatus can be improved.

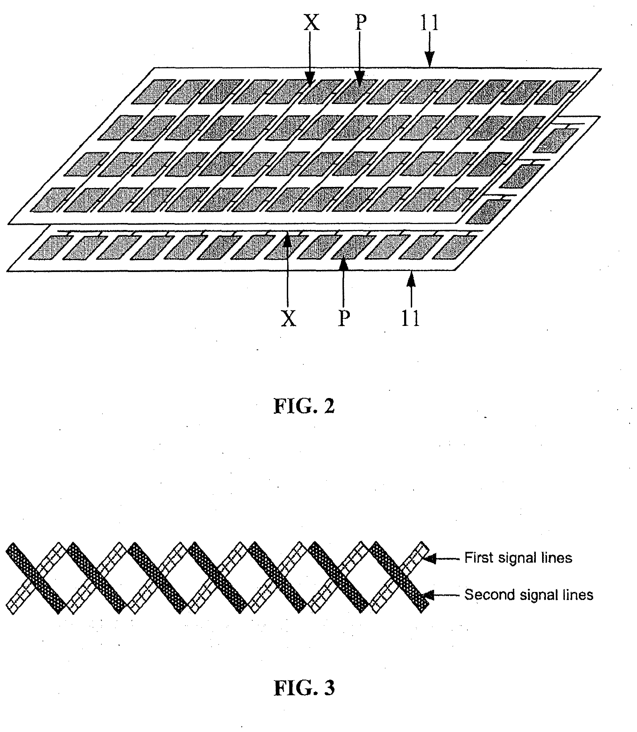

FIG. 2 illustrates a schematic diagram of the stacking of display panels in the display apparatus disclosed herein. Specifically for conciseness and for the purpose of illustration, only two display panels 11 of the display apparatus are illustrated in the figure.

As shown in FIG. 2, each display panel 11 includes a plurality of pixel structures P and a plurality of signal lines X that are electrically coupled with each of the plurality of pixel structures P. As further shown in FIG. 2, each display panel 11 has a plurality of signal lines X, which are in parallel with each other. Each of the plurality of signal lines X can be a data line or a lead line for a gate line. Each of the plurality of pixel structures P of each display panel 11 has an outer surface of a rectangular shape.

With regard to the stacking of the two display panels 11 in the display apparatus, it is configured such that lengths of each pixel structure P of the two display panels 11 are substantially parallel to each other (not shown in FIG. 2), widths of each pixel structure P of the two display panels 11 are also substantially parallel to each other (not shown in FIG. 2), and the plurality of signal lines of the two display panels are staggered with one another such that projections of the plurality of signal lines of the two display panels on a same plane have an angle (i.e. cross with each other).

It is noted that herein only two display panels 11 are illustrated in FIG. 2, yet these two display panels 11 can be any two of the n display panels in the display apparatus (including the first display panel 11' and the second display panel 11" as described above and illustrated in FIG. 1), and the stacking of the n display panels in the display apparatus can substantially reference to the stacking of the two display panels 11 as specifically illustrated in FIG. 2.

FIG. 3 is a schematic diagram illustrating a positional relationship of projection of a plurality of signal lines from any two display panels in a display apparatus on a same plane according to some embodiments of the disclosure. Specifically, "first signal lines" in FIG. 3 refer to projection of the signal lines from one of the any two display panel 11 on a plane (not shown in FIGS. 1-3); and "second signal lines" refer to projection of the signal lines from the other of the any two display panel 11 on the same plane.

Herein, optionally, the plane can be a plane that is parallel to a surface of any one of the display panels, and the plurality of signal lines can be data lines or lead lines for gate lines. Optionally, the projections of the plurality of signal lines from any display panel on a plane can be orthographic projections of the signal lines on the plane. The signal lines can comprise at least one of data lines or lead lines for gate lines.

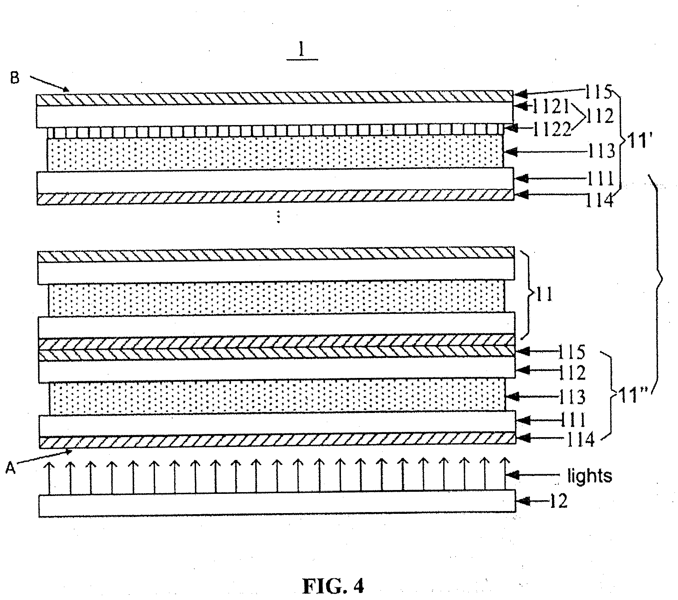

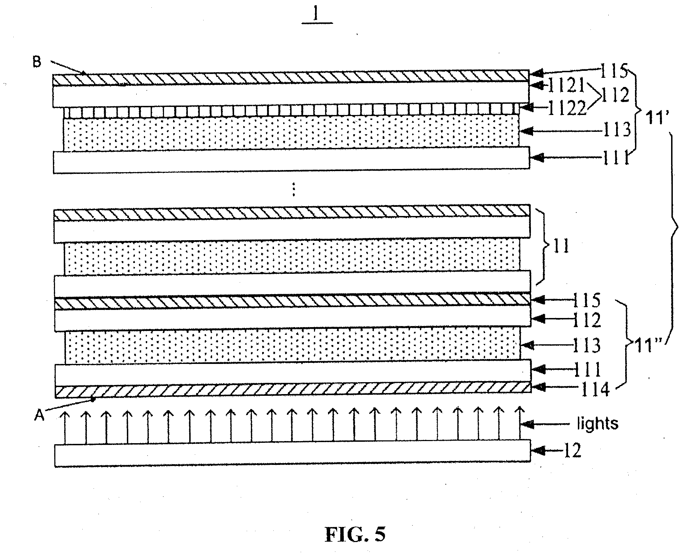

FIG. 4 and FIG. 5 respectively illustrate a schematic diagram of the structure of a display apparatus according to two different embodiments of the disclosure.

As shown in FIGS. 4 and 5, each of the n display panels 11 in the display apparatus that are stacked over one another includes an array substrate 111, an opposing substrate 112, and a liquid crystal layer 113. Specifically, in each display panel of the display apparatus, the array substrate 111 and the opposing substrate 112 are arranged to be opposing to each other; the liquid crystal layer 113 is arranged between the array substrate 111 and the opposing substrate 112; and the plurality of signal lines are arranged in the array substrate 111.

In the n display panels 11, the array substrate 111 and the opposing substrate 112 from each display panel 11are alternately arranged in the display apparatus. In other words, for any two adjacent display panels 11, an array substrate 111 of one of the two adjacent display panels 11 is stacked over an opposing substrate 112 of another of the two adjacent display panels 11.

In the display apparatus disclosed herein, the array substrate 111 in each of the n display panels 11 has a substantially same structure. Specifically, the array substrate 111 in each display panel 11 comprises a first substrate, and a gate electrode pattern layer (including gate electrodes and lead lines for the gate electrodes), a gate insulating layer, data lines, an active layer, a source-drain electrode metal layer, a passivation layer, and pixel electrodes, etc. These elements, components, or film layers of the array substrate are not shown in FIG. 4 or FIG. 5, but can reference to conventional display technologies that are known to people of ordinary skills in the field.

With further reference to FIGS. 4 and 5, the display apparatus 1 has a light-incident side A and a light-emitting side B. The n display panels 11 include a first display panel 11', arranged at the light-emitting side B of the display apparatus. The color film layer 112 of the first display panel 11' includes a second substrate 1121, and a black matrix pattern (not shown in the figures), a color filter layer 1122, and a buffer material layer ( not shown in the figures), sequentially arranged over one side of the second substrate 1121. The color filter layer 1122 can include a red filter unit, a green filter unit, and a blue filter unit, but can also include filter units of other primary colors.

In the display apparatus, except the first display panel 11', the opposing substrate 112 of each of the others of the n display panels 11 is not provided with a color filter layer. In other words, the opposing substrate in the first display panel 11' includes a second substrate 1121, and sequentially over the second substrate 1121, a black matrix patterning layer, a color filter layer 1122, and a buffer material layer. The opposing substrate 112 in other display panels includes a second substrate 1121, and sequentially over the second substrate 1121, a black matrix patterning layer and a buffer material layer.

In the display apparatus, the opposing substrate 112 of the first display panel 11' can be a color film substrate that is commonly employed in a conventional LCD display apparatus, whereas the opposing substrate 112 of the other of the n display panels does not include a color filter layer. Such a configuration can simplify the structure of the display apparatus.

It is noted that each of the n display panels can further include a common electrode, which is not shown in the figures. Depending on the different mode of different display panel, the common electrode in each display panel can be arranged in the array substrate 111, or in the opposing substrate 112.

As further illustrated in FIG. 4 and FIG. 5, the display apparatus further includes a backlight 12, which is arranged over a side of a second display panel 11" of the n display panels 11. Herein the second display panel 11" is defined as a display panel arranged at the light-incident side A of the display apparatus.

The backlight 12 can be a typical backlight that is employed in a conventional LCD display apparatus, whose structure is skipped in description.

As further shown in FIG. 4 or FIG. 5, lights from the backlight 12 can sequentially transmit through the second display panel 11", intermediate display panels (the other display panels of the n display panels other than the first display panel 11' or the second display panel 11"), the first display panel 11', and emit out through the opposing substrate 112 of the first display panel 11'. When the lights from the backlight 12 reach one particular display panel during the transmission process thereof, the liquid crystal molecules in the liquid crystal layer 113 in the display panel can adjust the lights, to thereby allow the display apparatus to display different images.

As shown in FIG. 4, each of the n display panels 11 further includes a first polarization film 114 and a second polarization film 115. In each display panel, the first polarization film 114 is arranged over a side of the array substrate 111, and the second polarization film 115 is arranged over a side of the opposing substrate 112.

Specifically, in each display panel 11, the first polarization film 114 attaches on a side surface of the array substrate 111 that is distal to the liquid crystal layer 113, and the second polarization film 115 attaches on a side surface of the opposing substrate 112 that is distal to the liquid crystal layer 113.

Furthermore, in any one of the n display panels in the display apparatus illustrated in FIG. 4, the first polarization film 114 thereof and the second polarization film 115 thereof are configured to have their respective polarization directions to be perpendicular to each other. It is further configured such that a polarization direction of one polarization film in one display panel is parallel to a polarization direction of a polarization film that is immediately adjacent to the one polarization film in a display panel that is immediately adjacent to the one display panel, to thereby allow the lights to transmit through the two display panels.

In the embodiments of the display apparatus illustrated in FIG. 5, the second display panel 11" includes a first polarization film 114, arranged over a side of the array substrate 111 in the second display panel 11". Each of the n display panels includes a second polarization film 115, which is arranged over a side of the opposing substrate 112 in the each of the n display panels.

Specifically, in the second display panel 11", the first polarization film 114 attaches a side surface of the array substrate 111 that is distal to the liquid crystal layer 113. In each of the n display panels, the second polarization film 115 attaches a side surface of the opposing substrate 112 that is distal to the liquid crystal layer 113.

It is configured such that in the second display panel 11", the first polarization film 114 thereof and the second polarization film 115 thereof have their respective polarization directions to be perpendicular to each other. It is further configured such that the polarization directions of the second polarization films 115 in any two of the n display panels are parallel to each other.

In the embodiments described above and illustrated in FIG. 5, by configuring a second polarization film 115 in each of the n display panels, or more specifically, by arranging a second polarization film 115 over a side of the opposing substrate 112 distal to the liquid crystal layer 113 in each display panel, the second polarization film 115 can shield the lights when the display apparatus realizes a display at a dark state, so that the brightness of the display apparatus at the dark state can be reduced, in turn leading to an elevated contrast ratio of the display apparatus.

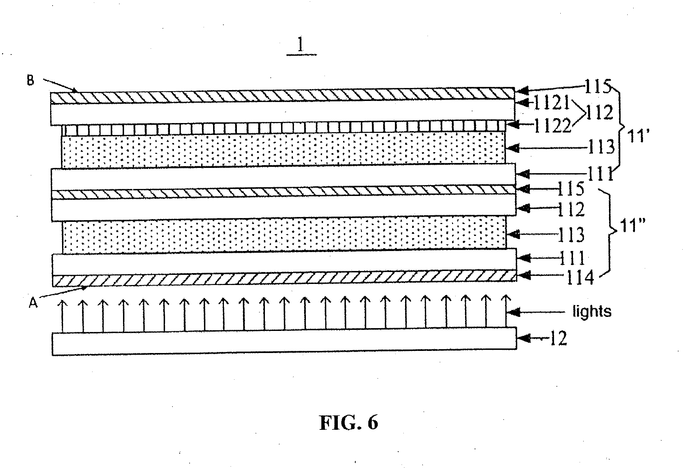

FIG. 6 illustrates a schematic diagram of the structure of a display apparatus according to yet some other embodiments of the disclosure. As shown in FIG. 6, the display apparatus includes two display panels 11. The plurality of signal lines (e.g. data lines) of each of the two display panels 11 are configured such that their projections on a same plane have an angle of 90°.

As such, the plurality of signal lines from these two display panels can staggeringly shield the lights. In turn the overall brightness of the display apparatus can be staggered, effectively avoiding the issue where the inaccurate alignment of the stacking of the n display panels causes an uneven brightness of the display apparatus. Thereby the evenness of the brightness of the display apparatus can be improved.

It is noted that when the n display panels 11 are stacked over one another, the n display panels 11 need to be aligned first. Due to the limitation of current alignment technologies, the accuracy for alignment can reach about 0.5 mm. However, the dimensions for each of the plurality of pixel structures in each display panel 11 is around one hundred micrometers. As such, after the stacking of the n display panels 11, if one of current alignment technologies is employed, there will be a mis-alignment issue for both the pixel structures and the signal lines in the n display panels.

After stacking of the n display panels 11, if the projections of signal lines from the n display panels on a same plane do not have an angle between one another (i.e. the projections of signal lines from the n display panels on a same plane are parallel to one another), a Mura issue will be caused where there is an unevenness of the brightness in the display apparatus.

Yet if after stacking of the n display panels, the projections of signal lines from the n display panels on a same plane have an angle between one another, the evenness of the brightness for the display apparatus can be increased and the Mura issue can thus be also effectively addressed.

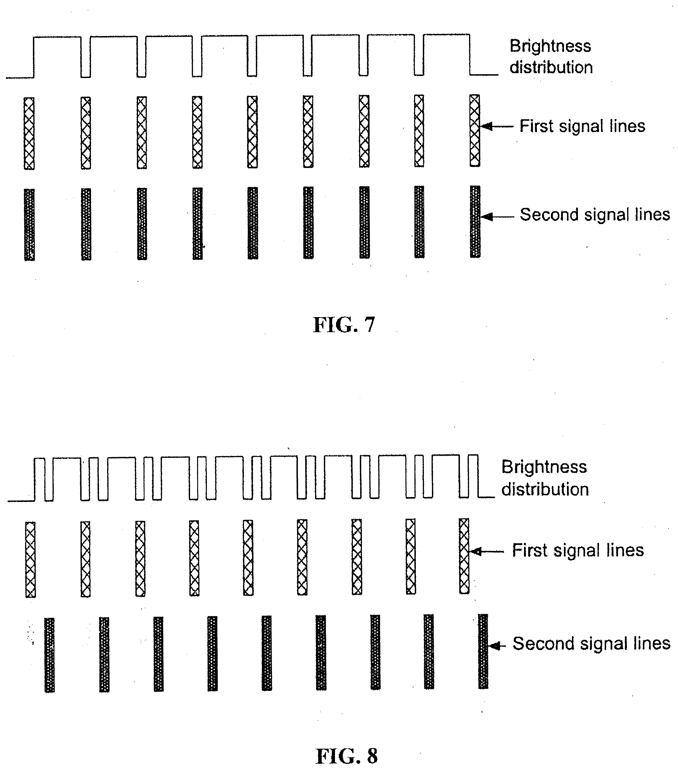

In the following, with reference to FIGS. 7-10, a detailed description of the effects of the technical solution disclosed above will further provided.

FIG. 7 and FIG. 8 respectively illustrate two different situations where the projections of signal lines from the n display panels stacked over one another on a same plane do not have an angle (i.e. angle = 0). FIG. 7 specifically illustrates the comparison between positional relationships of the projections of the signal lines from any two display panels on a same plane and the brightness distribution of the display apparatus at an ideal situation. FIG. 8 specifically illustrates the comparison between positional relationships of the projections of the signal lines from any two display panels on a same plane and the brightness distribution of the display apparatus at an actual situation.

In both FIG. 7 and FIG. 8, "first signal lines" represent the projections of the signal lines from one of the any two display panels 11 on a plane, and "second signal lines" represent the projections of the signal lines from the other of the any two display panels 11 on the same plane.

As shown in FIG. 7, under an ideal situation, the first signal lines and the second signal lines are completely overlapped or matched with each other. Thus the pixel structures from each of the any two display panels are aligned accurately, and the signal lines from each of the any two display panels are also aligned accurately. As such, in the ideal situation as shown in FIG. 7, there is no mis-alignment issue among the signal lines from the n display panels, and in turn the brightness of the display apparatus is evenly distributed.

However, under an actual situation as illustrated in FIG. 8, mis-alignment can occur when the n display panels 11 are stacked over each other. As shown in FIG. 8, the first signal lines 1 and the second signal lines 2 are parallel to one another, and are staggered. As such, in the actual situation as shown in FIG. 8, there is a mis-alignment issue among the signal lines from the n display panels, and in turn the brightness of the display apparatus has an uneven distribution, which can easily cause a Mura issue.

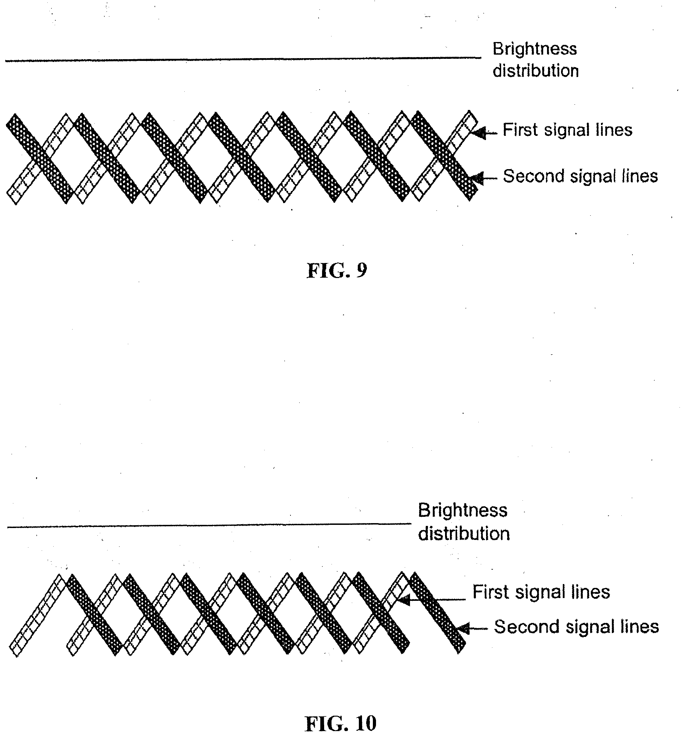

FIG. 9 and FIG. 10 respectively illustrate two different situations where the projections of signal lines from the n display panels stacked over one another on a same plane have an angle (i.e. not parallel). FIG. 9 specifically illustrates the comparison between positional relationships of the projections of the signal lines from any two display panels on a same plane and the brightness distribution of the display apparatus at an ideal situation. FIG. 10 specifically illustrates the comparison between positional relationships of the projections of the signal lines from any two display panels on a same plane and the brightness distribution of the display apparatus at an actual situation.

In both FIG. 9 and FIG. 10, first signal lines represent the projections of the signal lines from one of the any two display panels 11 on a plane, and second signal lines represent the projections of the signal lines from the other of the any two display panels 11 on the same plane.

As shown in FIG. 9, the first signal lines and the second signal lines cross with each other. Thus the pixel structures from each of the any two display panels are aligned accurately, and the signal lines from each of the any two display panels are also aligned accurately. As such, in the ideal situation as shown in FIG. 9, there is no mis-alignment among the signal lines from the n display panels, and the distribution curve for the brightness of the display apparatus is presented as a straight line in FIG. 9. The display apparatus has a relatively evenly distributed brightness.

However, in an actual situation as illustrated in FIG. 10, mis-alignment can occur when the n display panels 11 are stacked over each other. As shown in FIG. 10, the first signal lines 1 and the second signal lines 2 cross to one another, and are staggered. Therefore, in the actual situation as shown in FIG. 10, there is a mis-alignment among the signal lines from the n display panels, however, because the projection of the signal lines from any two display panels cross with each other, although mis-alignment issues can occur when the n display panels 11 are stacked over each other, the distribution curve for the brightness of the display panels 11 is still presented as a straight line. The display apparatus also has a relatively evenly distributed brightness, and does not incur the Mura issue.

By means of the solutions provided by any one of the embodiments described above, the contrast ratio for the display panel can be greatly improved, which can be elevated to reach a million. As such, the display effect of the display apparatus can be greatly increased, effectively avoiding the issue of uneven distribution for the brightness of the display apparatus.

In summary, in the display apparatus disclosed herein, because the n display panels 11 are stacked over one another, each of the n display panel is able to shield a light, resulting in a reduced brightness of the display apparatus at the dark state, in turn leading to an increased contrast ratio of the display apparatus. Thereby the issues associated with current LCD display apparatuses, such as low contrast ratio and poor display effects, can be effective solved.

Additionally, because the signal lines of each of any two of the n display panels 11 are configured such that their projections on a same plane have an angle, the signal lines in different display panels can staggeringly shield the lights. As such, the overall brightness of the display apparatus can be staggered, effectively avoiding the issue where the inaccurate alignment of the stacking of the n display panels causes an uneven brightness of the display apparatus. Thereby the evenness of the brightness of the display apparatus can be improved.

In a second aspect, the present disclosure further provides a method for manufacturing a display apparatus as described above.

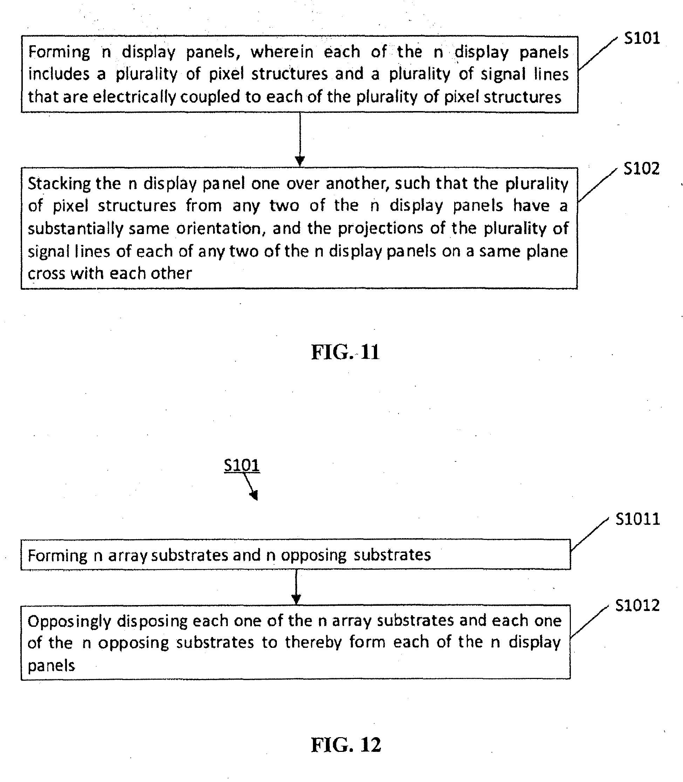

FIG. 11 is a flow chart illustrating a method for manufacturing a display apparatus according to some embodiments of the disclosure. Such a method can be applied to manufacture the display apparatus 1 according to any one of the embodiments as illustrated in FIG. 1, FIG. 4, FIG. 5, or FIG. 6.

As illustrated in FIG. 11, the method includes the following steps S101-S102.
S101: forming n display panels, wherein each of the n display panels includes a plurality of pixel structures and a plurality of signal lines that are electrically coupled to each of the plurality of pixel structures;
S102: stacking the n display panel one over another, such that the plurality of pixel structures from any two of the n display panels have a substantially same layout, and the projections of the plurality of signal lines of each of any two of the n display panels on a same plane cross with each other.

Optionally, after step S102, the method further comprises:
S103: arranging a backlight over a side of a second display panel, wherein the second display panel is a display panel of the n display panels that is arranged at a light-incident side of the display apparatus.

Optionally, as illustrated in FIG. 12, the step S101 of forming n display panels can include the following sub-steps:
S1011: forming n array substrates and n opposing substrates; and
S1012: opposingly disposing each one of the n array substrates and each one of the n opposing substrates to thereby form each of the n display panels.

Optionally, the step S102 of stacking the n display panel one over another includes:

Sequentially stacking the n display panels one over another such that the n array substrates and the n opposing substrates are alternately arranged over one another.

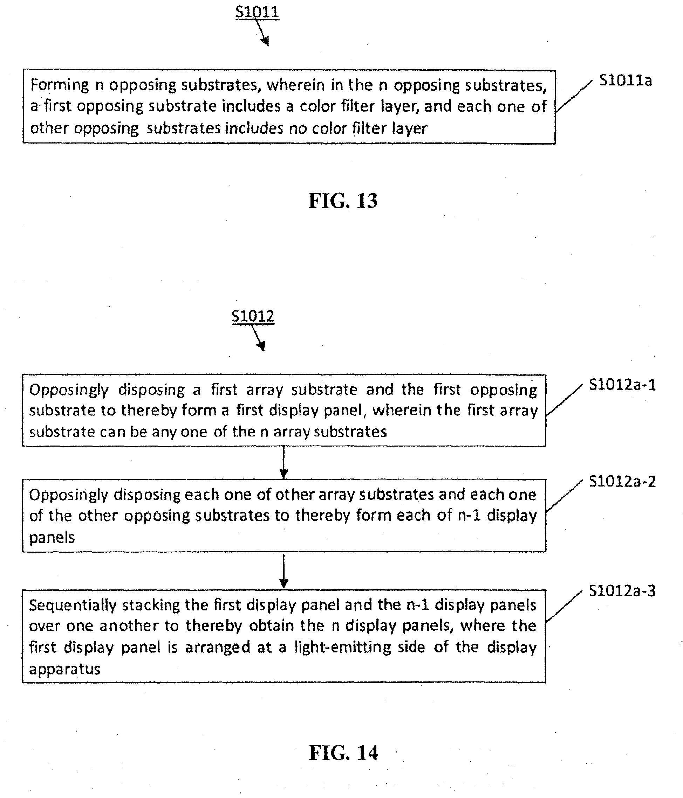

According to some embodiments of the method, in sub-step S1011, the forming n opposing substrates comprises the sub-steps S1011a, as illustrated in FIG. 13:
S1011a: Forming n opposing substrates, wherein in the n opposing substrates, a first opposing substrate includes a color filter layer, each one of other opposing substrates (i.e. opposing substrates of the n opposing substrates other than the first opposing substrate) includes no color filter layer.

Accordingly, the sub-step S1012 of opposingly disposing each one of the n array substrates and each one of the n opposing substrates to thereby form each of the n display panels comprises the following sub-steps S1012a-S1012c, as illustrated in FIG. 14:
S1012a-1: opposingly disposing a first array substrate and the first opposing substrate to thereby form a first display panel, wherein the first array substrate can be any one of the n array substrates;
S1012a-2: opposingly disposing each one of other array substrates (i.e. array substrates of the n array substrates other than the first array substrate) and each one of the other opposing substrates (i.e. opposing substrates of the n opposing substrates other than the first opposing substrate) to thereby form each of n-1 display panels (i.e. display panels of the n display panels other than the first display panel); and
S1012a-3: sequentially stacking the first display panel and the n-1 display panels over one another to thereby obtain the n display panels, where the first display panel is arranged at a light-emitting side of the display apparatus.

There are several different embodiments for arranging polarization films in the n display panels in the method.

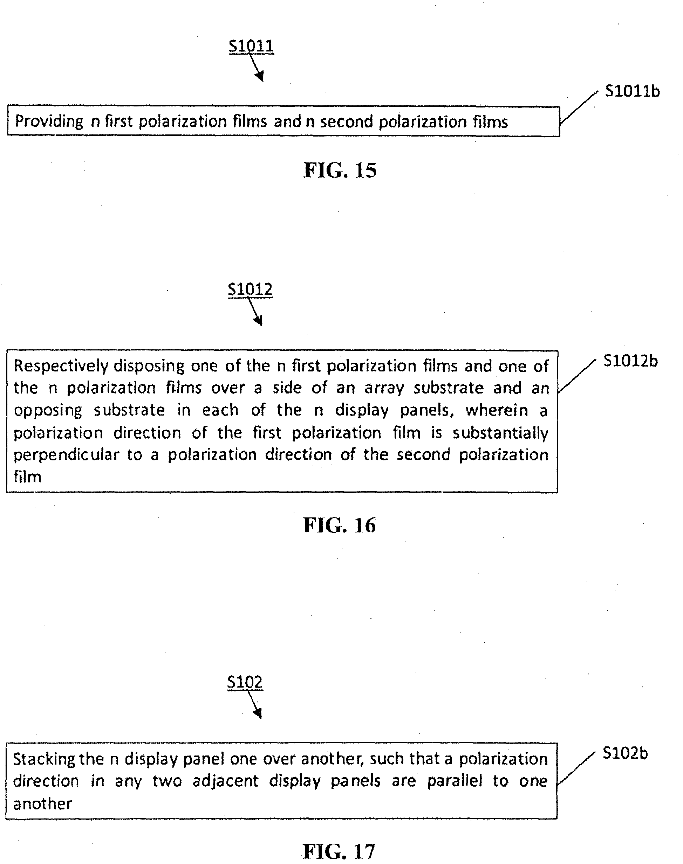

According to some embodiments of the method, the sub-step S1011 further comprises the sub-step S1011b, as illustrated in FIG. 15:
S1011b: providing n first polarization films and n second polarization films;
Accordingly, the sub-step S1012 of opposingly disposing each one of the n array substrates and each one of the n opposing substrates to thereby form each of the n display panels comprises the following sub-step S1012d, as illustrated in FIG. 16:
   S1012b: respectively disposing one of the n first polarization films and one of the n polarization films over a side of an array substrate and an opposing substrate in each of the n display panels, wherein a polarization direction of the first polarization film is substantially perpendicular to a polarization direction of the second polarization film;
   Further in accordance, the step of S102 (i.e. stacking the n display panel one over another) includes the following sub-step S102b, as illustrated in FIG. 17:
      S102b: stacking the n display panels one over another, such that polarization directions of two of the n first polarization films and the n second polarization films that are adjacent to each other are parallel to one another.

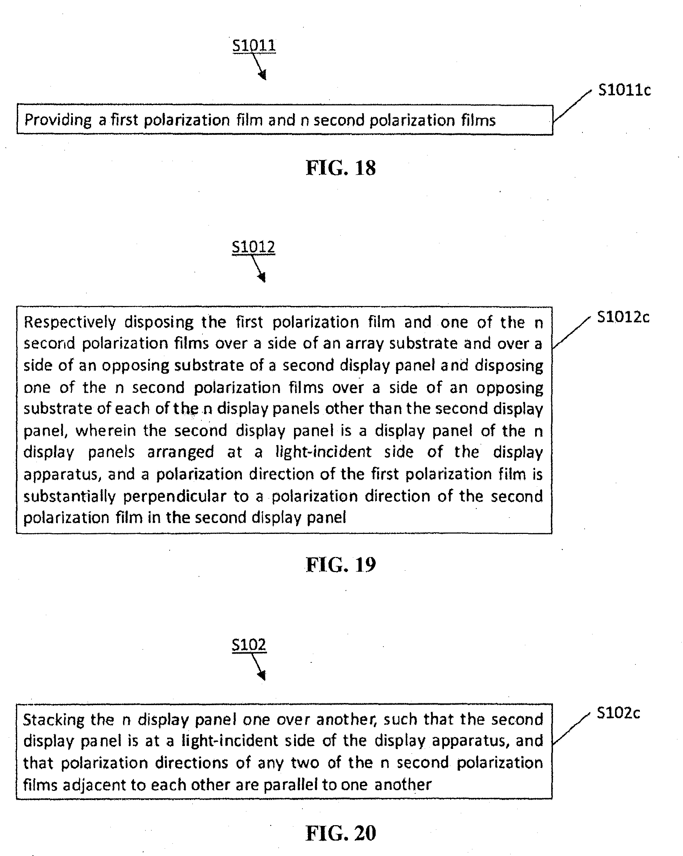

According to some other embodiments of the method, the sub-step S1011 further comprises the sub-step S1011c, as illustrated in FIG. 18:
S1011c: providing a first polarization film and n second polarization films.

Accordingly, the sub-step S1012 of opposingly disposing each one of the n array substrates and each one of the n opposing substrates to thereby form each of the n display panels comprises the following sub-step S1012c, as illustrated in FIG. 19:
S1012c: respectively disposing the first polarization film and one of the n second polarization films over a side of an array substrate and over a side of an opposing substrate of a second display panel and disposing one of the n second polarization films over a side of an opposing substrate of each of the n display panels other than the second display panel, wherein the second display panel is a display panel of the n display panels arranged at a light-incident side of the display apparatus, and a polarization direction of the first polarization film is substantially perpendicular to a polarization direction of the second polarization film in the second display panel.

Further in accordance, the step of S102 (i.e. stacking the n display panel one over another) includes the following sub-step S102c, as illustrated in FIG. 20:
S102c: stacking the n display panel one over another, such that the second display panel is at a light-incident side of the display apparatus, and that polarization directions of any two of the n second polarization films adjacent to each other are parallel to one another.

According to some embodiments of the method, step S101 includes:
Forming n display panels, wherein each of the n display panels comprises a plurality of pixel lines and a plurality of signal lines, wherein the plurality of signal lines are parallel to one another, each of the plurality of pixel lines includes a plurality of pixel structures, each of the plurality of signal lines is electrically coupled with each of the pixel structures in each of the plurality of pixel lines.

Optionally, the n display panels consist of two display panels, the projections of the plurality of signal lines from the two display panels on a same plane have an angle of 90°.

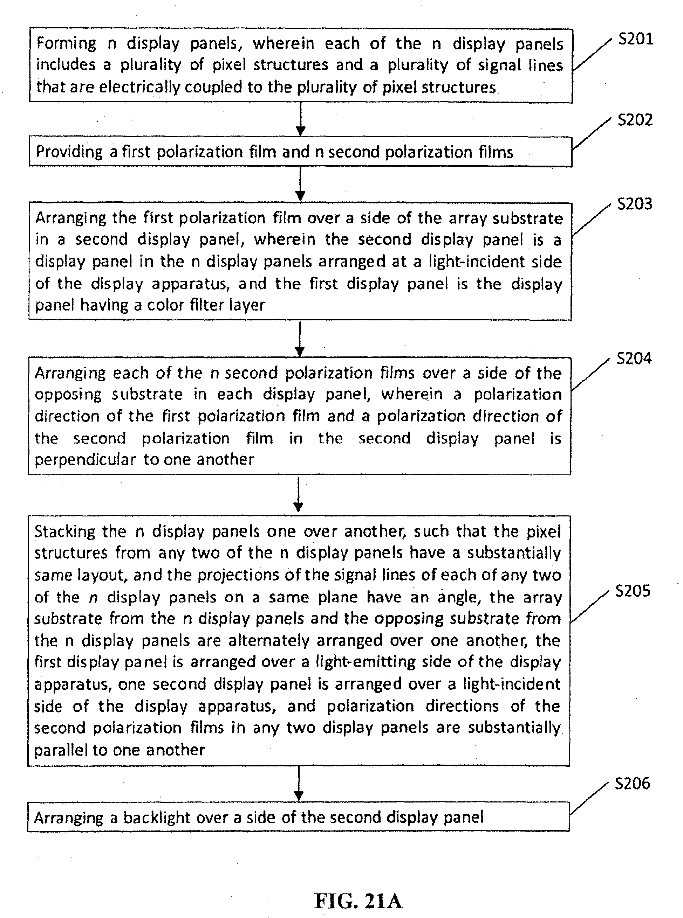

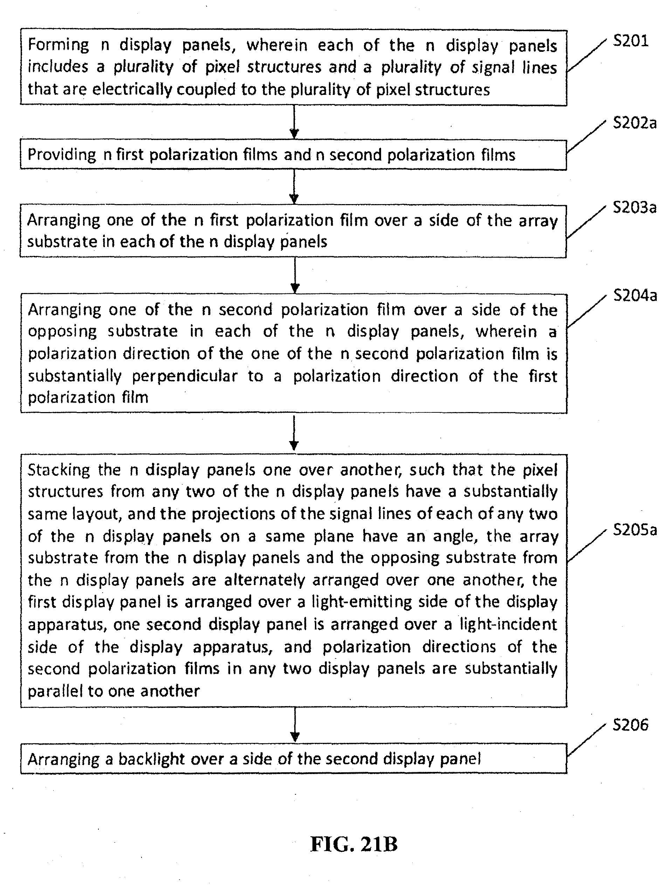

FIG. 21A and FIG. 21B are respectively a flow chart illustrating a method for manufacturing a display apparatus according to some specific embodiments of the disclosure. These embodiments of the method can be utilized for manufacturing the display apparatus 1 according to any one of the embodiments as illustrated in FIG. 1, FIGS. 4-6. In the following, the manufacturing method of the embodiments of the display apparatus as illustrated in FIG. 5 is described in detail as an illustrating example.

As shown in FIG. 21A, the method includes steps S201-S206:
S201: forming n display panels, wherein each of the n display panels includes a plurality of pixel structures and a plurality of signal lines that are electrically coupled to the plurality of pixel structures;
Optionally, as illustrated in FIG. 2, each of the n display panels comprises a plurality of pixel lines and a plurality of signal lines X, wherein the plurality of signal lines are parallel to one another, each of the plurality of pixel lines includes a plurality of pixel structures P, each of the plurality of signal lines X is electrically coupled with each of the pixel structures P in each of the plurality of pixel lines.

Herein each of the plurality of signal lines X can be a data line or a lead line for a gate line.

Specifically, in the embodiments as illustrated in FIGS. 4-6, each of the n display panels 11 include an array substrate 111 and an opposing substrate 112, and a liquid crystal layer 113 sandwiched between the array substrate 111 and the opposing substrate 112. Among the n opposing substrates 112, except the first opposing substrate 112 which includes a color filter layer, any other of the n opposing substrates 112 does not include a color filter layer.

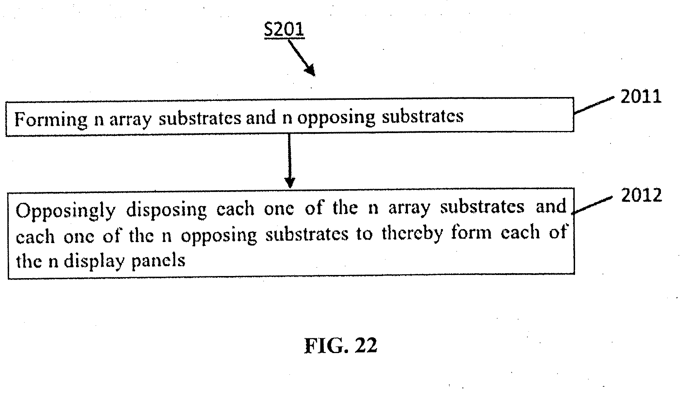

Accordingly, the step S201 of forming n display panels include the following sub-steps S2011-S2012, as illustrated in FIG. 22:
S2011: forming n array substrates and n opposing substrates;
Herein, optionally, each of the n array substrates is provided with a plurality of signal lines. Each of the plurality of signal lines can be a data line or a lead line for a gate line.

Optionally, each of the n array substrates can have a substantially same structure. Specifically, each array substrate can include, a first substrate, and a gate electrode patterning layer (including gate electrodes, lead lines for gate electrodes, etc.), a gate insulating layer, a data line, an active layer, a source-drain electrode metal layer, a passivation layer, and a pixel electrode, etc., which are sequentially over the first substrate.

Herein, the first substrate and each of the other film layers over the first substrate (e.g. the gate electrode patterning layer, the gate insulating layer, the data line, the active layer, the source-drain electrode metal layer, the passivation layer, and the pixel electrode, etc.), as well as their respective manufacturing method, can reference to conventional display technologies, whose description is skipped herein.

Optionally, the first opposing substrate includes a second substrate, and a black matrix patterning layer, a color filter layer, and a buffer material layer, wherein the black matrix patterning layer, the color filter layer, and the buffer material layer are sequentially disposed over the second substrate. Each of all other opposing substrates includes a second substrate, and a black matrix patterning layer, and a buffer material layer, wherein the black matrix patterning layer, and the separation layer are sequentially disposed over the second substrate.

Herein, the second substrate and each of the other film layers over the first substrate (e.g. the black matrix patterning layer, the color filter layer, and the separation layer), as well as their respective manufacturing method, can reference to conventional display technologies, whose description is skipped herein.

S2012: Opposingly disposing each one of the n array substrates and each one of the n opposing substrates to thereby form each of the n display panels.

Specifically, the first array substrate and the first opposing substrate can be opposingly arranged to form the first display panel, and each of the n-1 array substrate and each of the n-1 opposing substrate can be opposingly arranged to form the n-1 display panels.

It is noted that a liquid crystal layer is arranged between an array substrate and an opposing substrate in each of the n display panels. The method of forming a liquid crystal layer between an array substrate and an opposing substrate in each display panel can reference to conventional display technologies, whose description is skipped herein.

S202: providing a first polarization film and n second polarization films.

Herein, the first polarization film can have a structure that is substantially same as, or different from, each of the n second polarization films.

S203: arranging the first polarization film over a side of the array substrate in a second display panel, wherein the second display panel is a display panel in the n display panels arranged at a light-incident side of the display apparatus, and the first display panel is the display panel having a color filter layer.

Specifically, in a second display panel, the first polarization film can be attached on the side of the array substrate distal to the liquid crystal layer. The attaching process can reference to conventional display technologies, whose description is skipped herein.

S204: arranging each of the n second polarization films over a side of the opposing substrate in each display panel, wherein a polarization direction of the first polarization film and a polarization direction of the second polarization film in the second display panel is perpendicular to one another.

Specifically, in each display panel, one of the n second polarization film can be attached on the side of the opposing substrate distal to the liquid crystal layer. The attaching process can reference to conventional display technologies, whose description is skipped herein.

S205: stacking the n display panels one over another, such that the pixel structures from any two of the n display panels have a substantially same layout, and the projections of the signal lines of each of any two of the n display panels on a same plane have an angle, the array substrate from the n display panels and the opposing substrate from the n display panels are alternately arranged over one another, the first display panel is arranged over a light-emitting side of the display apparatus, one second display panel is arranged over a light-incident side of the display apparatus, and polarization directions of the second polarization films in any two display panels are substantially parallel to one another.

Herein, optionally, the angle can be 90°.

S206: Arranging a backlight over a side of the second display panel.

Herein the backlight can reference to conventional display technologies, whose description is skipped herein. Specifically, the backlight can be fixedly arranged over a side of the array substrate in the second display panel.

It is noted that the above sub-steps S202-S205 are described for a method manufacturing a display apparatus as illustrated in FIG. 5. If a display apparatus as illustrated in FIG. 4 is to be manufactured, the following sub-steps S202a-S205a can be used to replace the sub-steps S202-S205, as illustrated in FIG. 21B.

S202a: providing n first polarization films and n second polarization films.

S203a: arranging one of the n first polarization film over a side of the array substrate in each of the n display panels.

Specifically, the one of the n first polarization film can be attached on a side of the array substrate distal to the liquid crystal layer in each of the n display panels.

S204a: arranging one of the n second polarization film over a side of the opposing substrate in each of the n display panels, wherein a polarization direction of the one of the n second polarization film is substantially perpendicular to a polarization direction of the first polarization film.

Specifically, one of the n second polarization film can be attached on a side of the opposing substrate distal to the liquid crystal layer in each of the n display panels.

S205a: stacking the n display panels one over another, such that the pixel structures from any two of the n display panels have a substantially same layout, and the projections of the signal lines of each of any two of the n display panels on a same plane have an angle, the array substrate from the n display panels and the opposing substrate from the n display panels are alternately arranged over one another, the first display panel is arranged over a light-emitting side of the display apparatus, one second display panel is arranged over a light-incident side of the display apparatus, and polarization directions of the second polarization films in any two display panels are substantially parallel to one

Although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the exemplary embodiments, in addition to those described above, can be made by a person of ordinary skill in the art, having the benefit of the present disclosure, without departing from the scope of the present invention which is defined in the following claims.

## Claims

1. A display apparatus, comprising:
a backlight (12); and
a plurality of display panels (11) disposed over one another over one side of the backlight (12);
wherein each of the plurality of display panels (11) comprises a plurality of pixel structures (P) and a plurality of signal lines (X), wherein each of the plurality of signal lines (X) is a data line or each of the plurality of the signal lines (X) is a gate line,
wherein
the orthographic projections of the plurality of pixel structures (P) of each of the plurality of display panels (11) on a plane parallel to the main surfaces of the display panels match with one another; and **characterized in that**
the orthographic projections of the plurality of signal lines (X) in at least two of the plurality of display panels (11) on the plane cross with one another.

2. The display apparatus of Claim 1, wherein the orthographic projections of the plurality of signal lines (X) in any two of the plurality of display panels (11) on the plane cross with one another.

3. The display apparatus of Claim 1 or 2, wherein the plurality of signal lines (X) in a same display panel (11) are substantially parallel.

4. The display apparatus of Claim 1, wherein a number of the plurality of display panels (11) is two.

5. The display apparatus of Claim 1, further comprising a plurality of array substrates (111) and a plurality opposing substrates (112), wherein
each of the plurality of display panels (11) comprises one of the plurality of array substrates (111) and one of the plurality of opposing substrates (112), opposingly disposed over each other; and
the plurality of array substrates (111) and the plurality of opposing substrates (112) are alternately arranged.

6. The display apparatus of Claim 1, wherein the plurality of display panels (11) include a first display panel (11') arranged at a light-emitting side of the display apparatus, wherein:
the first display panel (11') comprises a color filter layer (1122) arranged at a light-emitting side thereof; and
each of the plurality of display panels (11) other than the first display panel (11') comprises no color filter layer (1122).

7. The display apparatus of Claim 1, wherein each of the plurality of display panels (11) comprises two polarization films (114, 115), wherein
the two of the plurality of polarization films (114, 115) are arranged respectively over two opposing sides of the each of the plurality of display panels (11), and are configured to have polarization directions thereof substantially perpendicular to one another; and
polarization directions of any two adjacent polarization films (114, 115) from different display panels (11) are substantially parallel to one another.

8. The display apparatus of Claim 1, wherein the plurality of display panels (11) include a second display panel (11") arranged at a light-incident side of the display apparatus, wherein:
the second display panel (11") comprises a first polarization film (114) arranged at a light-incident side thereof; and
each of the plurality of display panels (11) comprises a second polarization film (115), arranged at a light-emitting side thereof and configured to have a substantially parallel polarization direction;
wherein: a polarization direction of the first polarization film (114) is substantially perpendicular to a polarization direction of the second polarization film (115).

9. A method for manufacturing a display apparatus, comprising:
forming a plurality of display panels (11), wherein each of the plurality of display panels (11) comprises a plurality of pixel structures (P) and a plurality of signal lines (X), wherein each of the plurality of signal lines (X) is a data line or each of the plurality of the signal lines (X) is a gate line;
stacking the plurality of display panels (11) over one another, such that the orthographic projections of the plurality of pixel structures (P) of each of the plurality of display panels (11) on a plane parallel to the main surfaces of the display panels match with one another; and **characterized in that**
the orthographic projections of the plurality of signal lines (X) in at least two of the plurality of display panels (11) on the plane cross with one another.

10. The method of Claim 9, wherein in the stacking the plurality of display panels (11) over one another, it is configured such that the orthographic projections of the plurality of signal lines (X) in any two of the plurality of display panels (11) on the plane cross with one another.

11. The method of Claim 9, wherein
the forming a plurality of display panels (11) comprises:
providing a plurality of array substrates (111) and a plurality opposing substrates (112); and
forming each of the plurality of display panels (11) by opposingly arranging one of the plurality of array substrates (111) and one of the plurality of opposing substrates (112) over one another; and
in the stacking the plurality of display panels (11) over one another, it is configured such that the plurality of array substrates (111) and the plurality of opposing substrates (112) are alternately arranged.

12. The method of Claim 11, wherein
in the providing a plurality of array substrates (111) and a plurality opposing substrates (112), it is configured such that only one of the plurality opposing substrates (112) comprises a color filter layer (1122);
the forming each of the plurality of display panels (11) comprises:
forming a first display panel (11') by opposingly arranging one of the plurality of array substrates (111) and the only one of the plurality of opposing substrates (112) having the color filter layer (1122) over one another; and
in the stacking the plurality of display panels (11) over one another, it is further configured such that the first display panel (11') is arranged at a light-emitting side of the display apparatus.

13. The method of Claim 12, further comprising:
providing a backlight (12); and
arranging the backlight (12) over one side of the display apparatus distal to the light-emitting side of the display apparatus.

## Patentansprüche

1. Anzeigevorrichtung, mit:
einer Hintergrundbeleuchtung (12); und
einer Vielzahl von Anzeige-Panels (11), die übereinander auf einer Seite der Hintergrundbeleuchtung (12) angeordnet sind;
wobei jedes der Vielzahl von Anzeige-Panels (11) eine Vielzahl von Pixelstrukturen (P) und eine Vielzahl von Signalleitungen (X) aufweist, wobei jede der Vielzahl von Signalleitungen (X) eine Datenleitung ist oder jede der Vielzahl von Signalleitungen (X) eine Gate-Leitung ist,
wobei die orthographischen Projektionen der Vielzahl von Pixelstrukturen (P) von jedem der Vielzahl von Anzeige-Panels (11) parallel zu den Hauptoberflächen der Anzeige-Panels miteinander übereinstimmen; und
**dadurch gekennzeichnet, dass** die orthographischen Projektionen der Vielzahl von Signalleitungen (X) in mindestens zwei der Vielzahl von Anzeige-Panels (11) auf der Ebene einander kreuzen.

2. Anzeigevorrichtung nach Anspruch 1, wobei die orthographischen Projektionen der Vielzahl von Signalleitungen (X) in zwei beliebigen Anzeige-Panels (11) auf der Ebene einander kreuzen.

3. Anzeigevorrichtung nach Anspruch 1 oder 2, wobei die Vielzahl der Signalleitungen (X) in einem Anzeige-Panel (11) im Wesentlichen parallel sind.

4. Anzeigevorrichtung nach Anspruch 1, wobei eine Anzahl der Vielzahl von Anzeige-Panels (11) zwei ist.

5. Die Anzeigevorrichtung nach Anspruch 1, die ferner eine Vielzahl von Array-Substraten (111) und eine Vielzahl von gegenüberliegenden Substraten (112) aufweist, wobei
jedes der Vielzahl von Anzeige-Panels (11) eines der Vielzahl von Array-Substraten (111) und eines der Vielzahl von gegenüberliegenden Substraten (112) aufweist, die gegenüberliegend übereinander angeordnet sind; und
die Vielzahl der Array-Substrate (111) und die Vielzahl der gegenüberliegenden Substrate (112) abwechselnd angeordnet sind.

6. Anzeigevorrichtung nach Anspruch 1, wobei die Vielzahl von Anzeige-Panels (11) ein erstes Anzeige-Panel (11') aufweist, welches an einer Licht-emittierenden Seite der Anzeigevorrichtung angeordnet ist, wobei:
das erste Anzeige-Panel (11') eine Farbfilterschicht (1122) aufweist, die an einer Lichtemissionsseite davon angeordnet ist; und
jedes der Vielzahl von Anzeige-Panels (11) außer dem ersten Anzeige-Panel (11') keine Farbfilterschicht (1122) aufweist.

7. Anzeigevorrichtung nach Anspruch 1, wobei jedes der Vielzahl von Anzeige-Panels (11) zwei Polarisationsdünnschichten (114, 115) aufweist, wobei
die zwei der Vielzahl von Polarisationsdünnschichten (114, 115) jeweils über zwei gegenüberliegenden Seiten jedes der Vielzahl von Anzeige-Panels (11) angeordnet sind und konfiguriert sind, dass deren Polarisationsrichtungen im Wesentlichen senkrecht zueinander verlaufen; und
die Polarisationsrichtungen von jeweils zwei benachbarten Polarisationsdünnschichten (114, 115) von verschiedenen Anzeige-Panels (11) im Wesentlichen parallel zueinander sind.

8. Anzeigevorrichtung nach Anspruch 1, wobei die Vielzahl von Anzeige-Panels (11) ein zweites Anzeige-Panel (11") aufweist, das an einer Lichteinfallsseite der Anzeigevorrichtung angeordnet ist, wobei:
das zweite Anzeige-Panel (11") eine erste Polarisationsdünnschicht (114) aufweist, die an einer Lichteinfallsseite davon angeordnet ist; und
jedes der Vielzahl von Anzeige-Panels (11) eine zweite Polarisationsdünnschicht (115) aufweist, die an einer Lichteinfallsseite davon angeordnet ist und konfiguriert ist, dass sie eine im Wesentlichen parallele Polarisationsrichtung aufweist;
wobei: eine Polarisationsrichtung der ersten Polarisationsdünnschicht (114) im Wesentlichen senkrecht zu einer Polarisationsrichtung der zweiten Polarisationsdünnschicht (115) ist.

9. Verfahren zur Herstellung einer Anzeigevorrichtung, mit:
Bilden einer Vielzahl von Anzeige-Panels (11), wobei jedes der Vielzahl von Anzeige-Panels (11) eine Vielzahl von Pixelstrukturen (P) und eine Vielzahl von Signalleitungen (X) aufweist, wobei jede der Vielzahl von Signalleitungen (X) eine Datenleitung ist oder jede der Vielzahl von Signalleitungen (X) eine Gate-Leitung ist;
Stapeln der Vielzahl von Anzeige-Panels (11) übereinander, derart, dass die orthographischen Projektionen der Vielzahl von Pixelstrukturen (P) jedes der Vielzahl von Anzeige-Panels (11) parallel zu den Hauptoberflächen der Anzeige-Panels zueinander passen; und
**dadurch gekennzeichnet, dass** sich die orthographischen Projektionen der Vielzahl von Signalleitungen (X) in mindestens zwei der Vielzahl von Anzeige-Panels (11) auf der Ebene miteinander kreuzen.

10. Verfahren nach Anspruch 9, wobei es beim Übereinanderstapeln der Vielzahl von Anzeige-Panels (11) derart konfiguriert ist, dass sich die orthographischen Projektionen der Vielzahl von Signalleitungen (X) in jeweils zwei der Vielzahl von Anzeige-Panels (11) auf der Ebene kreuzen.

11. Das Verfahren nach Anspruch 9, wobei
das Bilden einer Vielzahl von Anzeige-Panels (11) aufweist:
Ausstatten einer Vielzahl von Array-Substraten (111) und einer Vielzahl gegenüberliegender Substrate (112); und
Bilden jedes der Vielzahl von Anzeige-Panels (11) durch gegenüberliegendes Anordnen eines der Vielzahl von Array-Substraten (111) und eines der Vielzahl von gegenüberliegenden Substraten (112) übereinander; und
beim Übereinanderstapeln der Vielzahl von Anzeige-Panels (11) derart konfiguriert wird, dass die Vielzahl von Array-Substraten (111) und die Vielzahl von gegenüberliegenden Substraten (112) abwechselnd angeordnet werden.

12. Das Verfahren nach Anspruch 11, wobei
beim Ausstatten einer Vielzahl von Array-Substraten (111) und einer Vielzahl gegenüberliegender Substrate (112) derart konfiguriert wird, dass nur eines der Vielzahl gegenüberliegender Substrate (112) eine Farbfilterschicht (1122) aufweist;
das Bilden jedes der Vielzahl von Anzeige-Panels (11) aufweist:
Bilden eines ersten Anzeige-Panels (11') durch gegenüberliegendes Anordnen eines der Vielzahl von Array-Substraten (111) und des einzigen der Vielzahl von gegenüberliegenden Substraten (112) mit der Farbfilterschicht (1122) übereinander; und
beim Übereinanderstapeln der Vielzahl von Anzeige-Panels (11) derart konfiguriert wird, dass das erste Anzeige-Panel (11') an einer Licht emittierenden Seite der Anzeigevorrichtung angeordnet ist.

13. Das Verfahren nach Anspruch 12, das ferner aufweist:
Ausstatten mit einer Hintergrundbeleuchtung (12); und
Anordnen der Hintergrundbeleuchtung (12) auf einer Seite der Anzeigevorrichtung distal zu der Licht-emittierenden Seite der Anzeigevorrichtung.

## Revendications

1. Appareil d'affichage, comprenant :
un éclairage arrière (12) ; et
une pluralité de panneaux d'affichage (11) disposés les uns sur les autres sur un côté de l'éclairage arrière (12) ;
dans lequel chacun de la pluralité de panneaux d'affichage (11) comprend une pluralité de structures de pixel(s) (P) et une pluralité de lignes de signal (X), dans lequel chacune de la pluralité de lignes de signal (X) est une ligne de données ou chacune de la pluralité de lignes de signal (X) est une ligne de grille ;
dans lequel :
les projections orthographiques de la pluralité de structures de pixel(s) (P) de chacun de la pluralité de panneaux d'affichage (11) sur un plan parallèle aux surfaces principales des panneaux d'affichage se correspondent les unes les autres ; et
**caractérisé en ce que** :
les projections orthographiques de la pluralité de lignes de signal (X) dans au moins deux de la pluralité de panneaux d'affichage (11) sur le plan se croisent les unes les autres.

2. Appareil d'affichage selon la revendication 1, dans lequel les projections orthographiques de la pluralité de lignes de signal (X) dans deux quelconques de la pluralité de panneaux d'affichage (11) sur le plan se croisent les unes les autres.

3. Appareil d'affichage selon la revendication 1 ou 2, dans lequel les lignes de signal de la pluralité de lignes de signal (X) dans un même panneau d'affichage (11) sont sensiblement parallèles.

4. Appareil d'affichage selon la revendication 1, dans lequel un nombre de la pluralité de panneaux d'affichage (11) est deux.

5. Appareil d'affichage selon la revendication 1, comprenant en outre une pluralité de substrats de matrice (111) et une pluralité de substrats opposés (112), dans lequel :
chacun de la pluralité de panneaux d'affichage (11) comprend un substrat de matrice de la pluralité de substrats de matrice (111) et un substrat opposé de la pluralité de substrats opposés (112), lesquels sont disposés de façon opposée l'un sur l'autre ; et
les substrats de matrice de la pluralité de substrats de matrice (111) et les substrats opposés de la pluralité de substrats opposés (112) sont agencés en alternance.

6. Appareil d'affichage selon la revendication 1, dans lequel la pluralité de panneaux d'affichage (11) inclut un premier panneau d'affichage (11') agencé au niveau d'un côté d'émission de lumière de l'appareil d'affichage, dans lequel :
le premier panneau d'affichage (11') comprend une couche de filtre couleur (1122) agencée au niveau de son côté d'émission de lumière ; et
chacun de la pluralité de panneaux d'affichage (11) autre que le premier panneau d'affichage (11') ne comprend pas de couche de filtre couleur (1122).

7. Appareil d'affichage selon la revendication 1, dans lequel chacun de la pluralité de panneaux d'affichage (11) comprend deux films de polarisation (114, 115), dans lequel :
les deux films de polarisation de la pluralité de films de polarisation (114, 115) sont respectivement agencés sur deux côtés opposés de chacun considéré de la pluralité de panneaux d'affichage (11) et sont configurés de telle sorte qu'ils présentent des directions de polarisation sensiblement perpendiculaires l'une à l'autre ; et
les directions de polarisation de deux quelconques films de polarisation adjacents (114, 115) de panneaux d'affichage différents (11) sont sensiblement parallèles l'une à l'autre.

8. Appareil d'affichage selon la revendication 1, dans lequel la pluralité de panneaux d'affichage (11) inclut un second panneau d'affichage (11") agencé au niveau d'un côté d'incidence de la lumière de l'appareil d'affichage, dans lequel :
le second panneau d'affichage (11") comprend un premier film de polarisation (114) agencé au niveau de son côté d'incidence de la lumière ; et
chacun de la pluralité de panneaux d'affichage (11) comprend un second film de polarisation (115) agencé au niveau de son côté d'émission de lumière et configuré de telle sorte qu'il présente une direction de polarisation sensiblement parallèle ;
dans lequel : une direction de polarisation du premier film de polarisation (114) est sensiblement perpendiculaire à une direction de polarisation du second film de polarisation (115).

9. Procédé pour fabriquer un appareil d'affichage, comprenant :
la formation d'une pluralité de panneaux d'affichage (11), dans lequel chacun de la pluralité de panneaux d'affichage (11) comprend une pluralité de structures de pixel(s) (P) et une pluralité de lignes de signal (X), dans lequel chacune de la pluralité de lignes de signal (X) est une ligne de données ou chacune de la pluralité de lignes de signal (X) est une ligne de grille ;
l'empilement de la pluralité de panneaux d'affichage (11) les uns sur les autres de telle sorte que les projections orthographiques de la pluralité de structures de pixel(s) (P) de chacun de la pluralité de panneaux d'affichage (11) sur un plan parallèle aux surfaces principales des panneaux d'affichage se correspondent les unes les autres ; et
**caractérisé en ce que** :
les projections orthographiques de la pluralité de lignes de signal (X) dans au moins deux de la pluralité de panneaux d'affichage (11) sur le plan se croisent les unes les autres.

10. Procédé selon la revendication 9, dans lequel, lors de l'empilement de la pluralité de panneaux d'affichage (11) les uns sur les autres, la configuration est telle que les projections orthographiques de la pluralité de lignes de signal (X) dans deux quelconques de la pluralité de panneaux d'affichage (11) sur le plan se croisent les unes les autres.

11. Procédé selon la revendication 9, dans lequel :
la formation d'une pluralité de panneaux d'affichage (11) comprend :
la fourniture d'une pluralité de substrats de matrice (111) et d'une pluralité de substrats opposés (112) ; et
la formation de chacun de la pluralité de panneaux d'affichage (11) en agençant de façon opposée un substrat de matrice de la pluralité de substrats de matrice (111) et un substrat opposé de la pluralité de substrats opposés (112) l'un sur l'autre ; et
lors de l'empilement de la pluralité de panneaux d'affichage (11) les uns sur les autres, la configuration est telle que les substrats de matrice de la pluralité de substrats de matrice (111) et les substrats opposés de la pluralité de substrats opposés (112) sont agencés en alternance.

12. Procédé selon la revendication 11, dans lequel :
lors de la fourniture d'une pluralité de substrats de matrice (111) et d'une pluralité de substrats opposés (112), la configuration est telle que seulement l'un de la pluralité de substrats opposés (112) comprend une couche de filtre couleur (1122) ;
la formation de chacun de la pluralité de panneaux d'affichage (11) comprend :
la formation d'un premier panneau d'affichage (11') en agençant de façon opposée l'un de la pluralité de substrats de matrice (111) et le seulement un de la pluralité de substrats opposés (112) qui comporte la couche de filtre couleur (1122) l'un sur l'autre ; et
lors de l'empilement de la pluralité de panneaux d'affichage (11) les uns sur les autres, la configuration est en outre telle que le premier panneau d'affichage (11') est agencé au niveau d'un côté d'émission de lumière de l'appareil d'affichage.

13. Procédé selon la revendication 12, comprenant en outre :
la fourniture d'un éclairage arrière (12) ; et
l'agencement de l'éclairage arrière (12) sur un côté de l'appareil d'affichage distal par rapport au côté d'émission de lumière de l'appareil d'affichage.
